# NEUE EUROPÄISCHE PATENTSCHRIFT

(11) **EP 1 558 443 B2**
(45) Veröffentlichungstag und Bekanntmachung des Hinweises auf die Entscheidung über den Einspruch: **04.03.2015**
(45) Hinweis auf die Patenterteilung: 30.05.2007
(21) Anmeldenummer: 03775256.5
(22) Anmeldetag: 30.10.2003
(51) Int. Cl.: B32B 15/14

(54) **VERFAHREN ZUR HERSTELLUNG EINES PORÖSEN, PLATTENFÖRMIGEN METALLVERBUNDES**
METHOD FOR PRODUCING A POROUS, PLATE-TYPE METALLIC COMPOSITE
PROCEDE DE FABRICATION D'UN COMPOSITE METALLIQUE POREUX EN PLAQUE

(30) Priorität: 31.10.2002 DE 10250716
(43) Veröffentlichungstag der Anmeldung: 03.08.2005
(73) Patentinhaber: Melicon GmbH, 41836 Hückelhoven (DE)
(72) Erfinder: MÜLLER, Ulrich, 41836 Hückelhoven (DE)
(74) Vertreter: Stenger, Watzke & Ring
(86) Internationale Anmeldenummer: PCT/EP2003/012045
(87) Internationale Veröffentlichungsnummer: WO 2004/039580

(56) Entgegenhaltungen:
- EP-A- 1 197 323
- WO-A1-00/71284
- WO-A1-93/18342
- WO-A1-94/14608
- BE-A3- 1 007 596
- DE-U- 20 119 367
- FR-A- 2 585 603
- US-A- 3 437 783
- US-A- 3 469 297
- US-A- 3 505 038
- US-A- 5 679 441
- US-B1- 6 387 535
- US-B1- 6 410 878
- US-B1- 6 674 042
- PATENT ABSTRACTS OF JAPAN vol. 1997, no. 02, 28. Februar 1997 (1997-02-28) & JP 08 284279 A (TOYO ELECTRIC MFG CO LTD), 29. Oktober 1996 (1996-10-29)
- 'Capacitor Discharge Welding Technical Data' CD FUSION SOLUTIONS 18 Mai 2001, Seiten 2 - 13

## Beschreibung

Die Erfindung betrifft ein Verfahren zur Herstellung eines porösen, plattenförmigen Metallverbundes.

Die Herstellung poröser, plattenförmiger Metallverbunde, die beispielsweise als Leichtbauelemente oder Schalldämmplatten verwendet werden können, sind aus dem Stand der Technik an sich bekannt.

So offenbart beispielsweise die DE 39 35 120 ein Verfahren zur Herstellung von Metallverbundplatten, bei dem zwei äußere, ungelochte Metalltafeln mit einem dazwischenliegenden Stegematerial in Form eines Metallgitters aus Draht miteinander verbunden werden. Die Besonderheit dieses Verfahrens besteht dabei darin, daß die Gitterknotenpunkte des Metallgitters vor einem Verbinden des Metallgitters mit den Metalltafeln zunächst durch einen Walzvorgang auf die Dicke eines Drahtes flachgewalzt werden, so daß danach die Gitterknotenpunkte des Metallgitters mit den Metalltafeln verschweißt oder verklebt werden können. Mit Vorteil stellt sich auf diese Weise eine Metallverbundplatte ein, die durch eine nachträgliche Verformungsbehandlung noch weiterverarbeitet werden kann.

Ein weiteres Verfahren zur Herstellung von Metallverbundplatten ist aus der DE 20 57 474 bekannt. Offenbart werden hier poröse Metallfaserplatten sowie ein Verfahren zu dessen Herstellung. Gekennzeichnet ist das hier beschriebene Verfahren durch die Verwendung eines Faservlies, das bei einer Temperatur zwischen 100°C und 150°C in örtlich vorbestimmten Bereichen mit einem Druck von 700 N/cm² bis 1.200 N/cm² gepreßt wird, wobei nur in diesen vorbestimmten Bereichen auch eine Sinterung der Fasern erfolgt. Im Ergebnis ergibt sich so eine nur in Teilbereichen gesinterte Metallfaserplatte, die über eine hinreichend große Festigkeit verfügt, gleichwohl aber noch Bereiche mit einer vergleichsweise großen Faseroberfläche aufweist.

Bekannt ist aus der DE 199 24 675 zudem ein sintermetallurgisches Verfahren zur Herstellung eines Filterkörpers aus schmelzextrahierten Metallfasern. Angewendet wird dieses Verfahren beispielsweise zur Herstellung eines porösen Körpers, insbesondere eines Filterkörpers aus Fasern, insbesondere Metallfasern. Vorgesehen ist dabei, daß die in einem Haufwerk vorliegenden losen Fasern durch Agitation vereinzelt und in eine Form gefüllt und die Füllung anschließend unter Erhitzung gesintert wird. Im Ergebnis ergibt sich ein infolge der Sinterung fester und stabiler poröser Körper, der beispielsweise als Filterkörper eingesetzt werden kann.

Neben der vorbeschriebenen Verwendungsmöglichkeit als Filterkörper ist der Einsatz von gesinterten Metallfaserwerkstoffen auch im Bereich der Schalldämmung bekannt. So hat sich der Einsatz solcher gesinterter Metallfaserwerkstoffe beispielsweise zur Minderung der Geräuschemission in Gasturbinen bewährt.

Bei allen den vorgenannten Verfahren erfolgt der Vorgang des Sinterns typischerweise bei einer Temperatur, die zwischen der Liquidus- und der Solidustemperatur des verwendeten Werkstoffs liegt. Die Faserlänge und der Faserdurchmesser der mittels Sintern miteinander zu verbindenden Fasern können dabei stark variieren, wobei der Faserdurchmesser im Bereich von 1 µm bis 250 µm und die Faserlänge im Bereich zwischen 50 µm bis 50 mm liegen kann.

Um eine vorzeitige Oxidation der Fasern zu verhindern wird der Sinterprozeß in einem Vakuumofen durchgeführt. Die reinen Sinterzeiten liegen dabei im Bereich mehrerer Stunden, wobei das zu sinternde Material mechanisch verpreßt bzw. vorgepreßt in den Sintervorgang gegeben wird. Die auf diese Weise hergestellten Sinterkörper werden im Anschluß an die Verfahrensdurchführung zugeschnitten und können sodann als beispielsweise akustisches Dämmaterial verwendet und beispielsweise in Abgasmufflern von Gasturbinen eingesetzt werden.

Von Nachteil bei dem vorbekannten Verfahren ist jedoch der Umstand, daß bedingt durch die Größe verfügbarer Sinteröfen nur solche Sinterkörper herstellbar sind, die in Korrespondenz zur Größe des verwendeten Ofens in ihrer geometrischen Ausgestaltung begrenzt sind. Sollten beispielsweise Sinterkörper der vorgenannten Art geschaffen werden, die zumindest in einer Längenrichtung eine Größe von beispielsweise 1500 mm übersteigen, so ist dies unter Verwendung des vorgenannten Verfahrens nicht möglich. Um gleichwohl derartige Sinterkörper herstellen zu können, ist es erforderlich, zunächst in einem ersten Verfahrensschritt eine Mehrzahl vergleichsweise kleinerer Sinterkörper herzustellen, die dann anschließend in einem zweiten Verfahrensschritt entsprechend miteinander verbunden, beispielsweise miteinander verklebt oder verschweißt werden. Eine solche Verfahrensdurchführung ist in nachteiliger Weise nicht nur zeit- sondern auch kostenaufwendig.

Die US-A-6,387,535 beschreibt ein Verfahren zur Herstellung von Sandwichplatten mit festen ungelochten Metallplatten als äußere Begrenzung in Verbindung mit einer Zwischenlage aus Stahlwolle, wobei die Stahlwolle untereinander und mit den Deckplatten mittels Lichtbogenschweißen verschweißt sind, wodurch ein starres, unbewegliches Netzwerk der Fasern gebildet wird. Ferner bezieht sich diese Druckschrift auf eine entsprechend hergestellte Sandwichplatte.

Die DE-U-201 19 367 offenbart ein Sandwich-Verbundmaterial umfassend zwei Metallplatten, die an einem Faserkern befestigt und durch diesen getrennt sind, wobei der Kern ein dreidimensionales, poröses, Metallfasern umfassendes Netzwerk umfaßt, worin im wesentlichen alle Fasern in einem spitzen Winkel zu den Platten geneigt sind. Das Sandwich-Verbundmaterial kann durch einfaches Befestigen des Faserkerns zwischen zwei Metallplatten hergestellt werden, beispielsweise durch Einsatz eines Klebstoffes oder durch eine Hartlöttechnik.

Aus dem Stand der Technik sind ferner Verfahren bekannt, die mittels Schweißen eine Verbindung ausbilden, so z.B. aus der US 3,437,783 und der US 6,410,878 B1.

Es ist daher die **Aufgabe** der Erfindung, unter Vermeidung der vorgenannten Nachteile ein Verfahren vorzuschlagen, mit welchem bei gleichzeitiger Reduzierung der Herstellkosten ein plattenförmiger Metallverbund aus sinterbaren Fasern in beliebiger Größe zumindest in Bezug auf eine Dimension hergestellt werden kann.

Zur Lösung dieser Aufgabe wird ein Verfahren nach Anspruch 1 vorgeschlagen.

Es erfolgt mithin erfindungsgemäß eine stoffschlüssige Verbindung der einzelnen Metallfaser nicht durch Sintern, sondern mittels Verschweißen. Dies ist nicht nur vergleichsweise kostengünstig, auch wird hierdurch die Möglichkeit eröffnet, in Bezug auf zumindest eine Dimension einen Metallverbund beliebiger Länge auszubilden.

Zur Durchführung des erfindungsgemäßen Verfahrens werden Metallfasern In eine dafür vorgesehene Schweißvorrichtung eingebracht. Die Metallfasern werden In Form vorgefertigter Metallfasermatten verarbeitet, die beispielsweise als quasi Endlosmatten von einer Rolle abgewickelt werden. Alternativ kann auch nicht erfindungsgemäß vorgesehen sein, die Metallfasern einem Haufwerk entstammend in einem ersten Arbeitsschritt gegebenenfalls zunächst zu vereinzeln und anschließend als loses Metallfasergut der Schweißvorrichtung zuzuführen. Das Einbringen In die Schweißvorrichtung kann hierbei kontinuierlich fortlaufend erfolgen, so daß In der weiteren Fortführung des Verfahrens Metallverbundplatten unbeschränkter Längenausdehnung hergestellt werden können. Die in die Schweißvorrichtung eingebrachten Fasern werden sodann in einem Arbeitsschritt gepreßt und miteinander verschweißt, wozu in vorteilhafterweise beidseitig des auszubildenden Metallverbundes flächenhaft ausgebildete Elektroden angeordnet sind, die zum einen der Verschweißung der einzeinen Metallfasern als auch zum anderen dem Aufbringen einer hinreichenden Preßkraft dienen.

Als Schweißverfahren wird das Impulsschweißverfahren, vorzugsweise das Kondensatorimpulsschweißverfahren, eingesetzt, wobei die verwendeten Elektroden eine flächenhafte Ausdehnung von vorzugsweise zwischen 10 mm² und 25.000 mm² aufweisen. Ein besonderes Kennzeichen des Kondansatorimpulsschweißverfahrens ist die vergleichsweise kurze Dauer des eigentlichen Schweißvorganges, die in der Regel weniger als 1 s beträgt; im Zusammenhang mit der Durchführung des erfindungsgemäßen Verfahrens sogar weniger als 10 ms betragen kann.

Durch den sehr kurzen und sehr hohen Stromimpuls von bis zu 200.000 A bildet sich von Faser zu Faser des zusammengepreßten Metallverbundes ein elektrischer Widerstand aus, der dazu führt, daß das Material dort erhitzt und mit der nächst anliegenden Faser punktuell verschweißt wird. Die aufgebrachte spezifische Schweißenergie beträgt dabei 0,2 J/mm² bis 7,5 J/mm².

Dabei ist vorgesehen, daß der Metallverbund auf seinen beiden Flachseiten mit jeweils einem Drahtgewebe als Decklage verschweißt wind. Die Anordnung derartiger Drahtgewebe ist insofern von Vorteil, als daß das Verfahren weitestgehend unabhängig von Länge und Durchmesser der verwendeten Fasern durchführbar ist, was dazu führen kann, daß einzelne Fasern mit Ihren Enden aus dem Metallverbund herausstehen. Um diesem Umstand zu begegnen, wird der Faserverbund beidseitig mit einem Drahtgewebe als Decklage verschweißt Dabei kann ein Verschweißen der Drahtgewebe mit dem Metallverbund in vorteilhafterweise zeitgleich mit dem Verschweißen der Metallfasern durchgeführt werden, so daß ein zusätzlicher Arbeitsschritt infolge des Verschweißens der Decklagen nicht erforderlich ist.

Vor und/oder während des Schweißvorgangs werden die Metallfasern des Metallverbundes mit einem Druck beaufschlagt, wobei der Druck vorzugsweise mit einer Preßkraft von 0,1 N/mm² bis 10 N/mm², vorzugsweise von 1,5 N/mm² bis 6 N/mm², erzeugt wird.

Von Vorteil des erfindungsgemäßen Verfahrens ist ferner, daß der auf Basis einzelner Metallfasern zusammengestellte Metallverbund infolge der schockartig einwirkenden elektrischen Ladung in seiner Struktur zusätzlich verdichtet wird. Hierdurch kann eine insgesamt höhere Verdichtung des Metallverbundes während des Schweißvorganges erreicht werden.

Unter Einsatz einer geeigneten Automatisierungsvorrichtung, auf die an dieser Stelle nicht weiter eingegangen werden soll, werden die in Form von Matten vorliegenden Metallfasern endlos zumindest in einer Dimension den Elektroden abschnittsweise zugeführt. Die Breite des Metallverbundes kann dabei auf 10 mm bis 2000 mm, vorzugsweise auf 250 mm bis 1250 mm festgelegt werden. Die Fasern haben einen Durchmesser von durchschnittlich 1 µm bis 250 µm, vorzugsweise von 30 µm bis 100 µm. Die verwendeten Metallfasern können hierbei die gleiche Dicke, aber eine unterschiedliche Länge aufweisen, wobei sich gerade durch die Verwendung von Metallfasern unterschiedlicher Längen beim Pressen und Schweißen eine sehr stabile Faserstruktur, d.h. Fasermatrix ausbildet.

Ein nach dem erfindungsgemäßen Verfahren hergestellter Metallverbund kann in Anschluß an seine Herstellung konfektioniert und als schallschluckendes Medium verwendet und beispielsweise in ein Mufflersystem oder Abgasrohr einer Turbine eingesetzt werden. Die wesentlichen Vorteile gegenüber den bisherigen Metallverbunden, die mittels Sintern hergestellt werden, bestehen in den zumindest bezüglich einer. Dimension unbeschränkten Abmassen sowie in den deutlich günstigeren Herstellungskosten. Zudem kann durch die Möglichkeit des Kondensatorimpulsschweißverfahrens die Dicke der Metallverbunde beeinflußt werden, ohne daß ein weiterer Fertigungsschritt, wie z.B. das Walzen notwendig wäre. Auch hierdurch ergibt sich eine zusätzliche Kosteneinsparung, was sich gegenüber den herkömmlichen Verfahren als gleichfalls vorteilhaft erweist. Von Vorteil ist ferner, daß der nach dem erfindungsgemäßen Verfahren hergestellte Metallverbund in nachgeschalteten Verarbeitungsschritten weiterverarbeitet werden kann. So ist es beispielsweise möglich durch plastische Formgebung, z. B. durch Tiefziehen den nach dem Verfahren hergestellten Metallverbund auch zu geometrisch komplexen Strukturen umzuformen. So können beispielsweise sphärische Formkörper ausgebildet werden. Da der nach dem erfindungsgemäßen Verfahren hergestellte Metallverbund hitzebeständig ist, eignet er sich insbesondere als Schalldämmung in Verbrennungsturbinen. Auch eignet sich der erfindungsgemäß hergestellte Metallverbund als Gasbrennereinsatz, der in vorteilhafterweise eine homogene Verbrennung auf der gesamten Oberfläche des Brenners ermöglicht.

Um eine Oxidation während des Schweißvorganges zu verhindern, kann gemäß einem weiteren Merkmal der Erfindung vorgesehen sein, das Verfahren unter Schutzgas durchzuführen. Als Schutzgase eignen sich beispielsweise Argon, Helium und dergleichen.

Es kann eine Schalldämmplatte vorgesehen sein gebildet aus einem zwischen zwei Decklagen angeordneten Metallfaservlies, dessen Metallfasern miteinander und mit dem Decklagen verschweißt sind, wobei die Decklagen aus Drahtgewebe gebildet sind.

Anders als herkömmliche poröse Metallfaservliese sind die einzelnen Metallfasern der erfindungsgemäßen Schalldämmplatte nicht durch Sintern miteinander stoffflüssig verbunden, sondern mittels Schweißen. Dies erlaubt nicht nur eine vergleichsweise günstigere Herstellung der Schalldämmplatten, auch ist es möglich, die Schalldämmplatten zumindest in Bezug auf eine geometrische Dimension fortlaufend zu produzieren, so daß ein quasi endloses Metallfaservlies hergestellt werden kann. Zur weiteren Verwendung des Metallfaservlieses ist dieses dann bedarfsgerecht auf Länge zu konfektionieren.

Das Metallfaservlies ist auf seinen beiden gegenüberliegenden Flachseiten mit einer Decklage, die vorzugsweise aus Drahtgewebe gebildet ist, verschweißt. Hierdurch ergibt sich ein insgesamt sandwichartiger Aufbau mit zwei aus Drahtgewebe bestehenden Decklagen zwischen denen das Metallfaservlies angeordnet ist.

Die Schalldämmplatte ist In vorteilhafterweise formstabil, erlaubt aber gleichwohl eine Weiterverarbeitung in einem nachfolgenden Verarbeltungsschrltt. So ist es beispielsweise möglich, die Schalldämmplatten durch plastische Formgebung, z. B. durch Tiefziehen zu sphärischen Körpern weiterzubilden. Mit herkömmlich durch Sintern hergestellten Schalldämmplatten war dies bisher nicht möglich, so daß mit der erfindungsgemäßen Schalldämmplatte neue Möglichkeiten auch für die Weiterverarbeitung geschaffen werden.

Aufgrund der porösen Struktur eignen sich die erfindungsgemäß hergestellten Metallverbunde insbesondere als Schalldämmplatten. Im Unterschied zum herkömmlichen Sinterverfahrens bleibt die ursprünglich vorhandene Porösität der zur Bildung des späteren Metallverbundes zusammengeführten Metallfasern auch nach einem Verschweißen der einzelnen Metallfasern vergleichsweise weitestgehend vorhanden, so daß die Schalldämmplatten eine vergleichsweise größere Porösität aufweisen, als die aus dem Stand der Technik bekannten und mittels Sintern hergestellten Schalldämmplatten. Die Schalldämmplatten können daher gegenüber herkömmlichen Schalldämmplatten eine verbesserte Emlssionselgenschaften aufweisen.

Eine weitere Verwendungsmöglichkeit für den erfindungsgemäßen Metallverbund ist der Einsatz als Gasbnennereinsatz. Von Vorteil ist dabei die vielseitige Verwendbarkeit aufgrund der möglichen geometrischen Formenvielfalt durch z. B. plastische Formgebung, die kontrollierte und bestimmbare Ausdehnung bei Wärmeausdehnung, das geringe Gewicht sowie die Gewährleistung einer homogenen Verbrennung auf der gesamten Oberfläche des Brenners. Zudem bietet der Metallverbund eine hohe Sicherheit gegen Flammrückschlag, Korrosionsschutz auch bei höheren Temperaturen, eine hohe mechanische Schockbeständigkeit sowie eine geringe thermische inertion.

Weitere Vorteile und Merkmale der Erfindung ergeben sich aus der Beschreibung anhand der nachfolgenden Figuren. Dabei zeigen:
- Fig. 1:: in einer schematischen Darstellung das erfindungsgemäße Verfahren gemäß einem ersten Verfahrensschritt;
- Fig. 2:: in einer schematischen Darstellung das erfindungsgemäße Verfahren gemäß einem zweiten Verfahrensschritt und
- Fig. 3:: in einer schematischen Darstellung das erfindungsgemäße Verfahren gemäß einem dritten Verfahrensschritt.

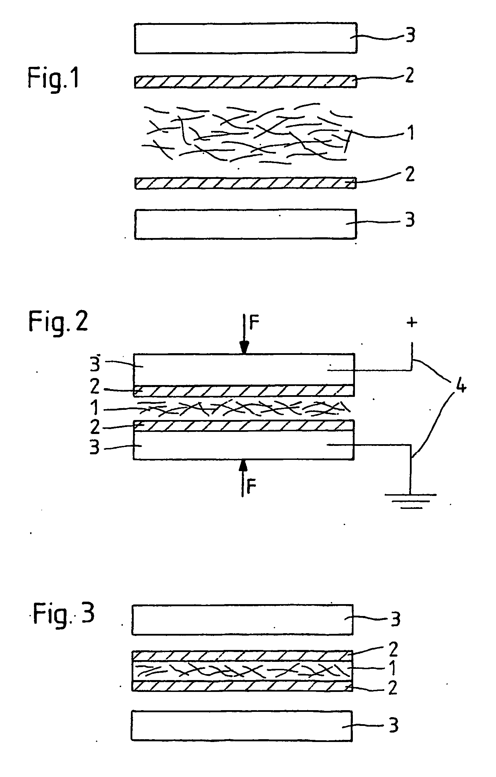

Die Durchführung des erfindungsgemäßen Verfahrens zeigen die Figuren 1 bis 3. Dabei ist schematisch in Fig. 1 ein erster, in Fig. 2 ein zweiter und in Fig. 3 ein dritter Verfahrensschritt dargestellt.

Gemäß der Darstellung nach Fig. 1 werden in einem ersten Verfahrensschritt die Metallfasern 1 als unverdichtetes Fasergut auf beiden gegenüberliegenden Flachseiten mit jeweils einem Drahtgewebe 2 belegt. Auf den den Metallfasern 1 jeweils abgewandten Seiten der Drahtgewebe 2 ist jeweils eine flächenhaft ausgebildete Elektrode 3 vorgesehen, die beide jeweils in Richtung auf die Metallfasern 1 verfahren werden und so nach Art einer Zange die Drahtgewebe 2 und die Metallfasern 1 zusammenführen und verpressen. Dargestellt ist dieser Verfahrensschritt schematisch in Fig. 2.

Die Elektroden 3 werden mit einer vordefinierten Kraft F beispielsweise hydraulisch derart weit zusammengefahren, bis eine definierte Flächenlast, d.h. ein definierter Anpreßdruck auf die Metallfasern 1 und das Drahtgewebe 2 aufgebracht ist. Zeitgleich zum Zusammenpressen der Metallfasern 1 und der Drahtgewebe 2 wird über den Stromanschluß 4 Strom in die Elektroden 3 eingeführt. Die Stromeinleitung erfolgt dabei erfindungsgemäß mittels in dieser Figur nicht dargestellter Kondensatoren, wobei durch schlagartige Entladung der Kondensatoren ein kurzer und starker Stromimpuls von bis zu 200.000 A durch die Drahtgewebe 2 und die Metallfasern 1 geleitet wird. Infolge des Einleiten dieses Stromimpulses bilden sich zwischen den einzelnen Metallfasern elektrische Widerstände aus, was dazu führt, daß das Material an diesen Stellen örtliche erhitzt und mit der nächstliegenden Faser punktuell verschweißt wird. Um Oxidationen während dieses Schweißvorganges zu verhindern, wird der gesamte Vorgang unter einer Schutzgasatmosphäre durchgeführt.

Fig. 3 zeigt den fertig hergestellten Metallfaserverbund, der sandwichartig aufgebaut ist und als Decklagen zwei Drahtgewebe aufweist, zwischen denen die zusammengepreßten und miteinander verschweißten Metallfasern 1 angeordnet sind. Infolge des vorbeschriebenen Schweißprozesses sind dabei nicht nur die einzelnen Metallfasern 1 miteinander sondern auch die Drahtgewebe 2 mit den Metallfasern 1 verschweißt, so daß ein insgesamt stabiler poröser und schallschluckender Metallverbund entsteht, der aber zugleich auch noch die Möglichkeit einer Nachbearbeitung durch z.B. Tiefziehen ermöglicht.

### Bezugszeichenliste

- 1: Metallfasern
- 2: Drahtgewebe
- 3: Elektrode
- 4: Stromanschluß
- F: Preßkraft

## Patentansprüche

1. Verfahren zur Herstellung eines porösen, plattenförmigen Metallverbundes, bei dem Metallfasern in Form vorgefertigter Metallfasermatten in einem Arbeitsschritt gepresst und miteinander verschweißt werden, wobei das Verschweißen der Metallfasern durch Impulsschweißen unter Verwendung flächenhafter Elektroden vorgenommen wird, wobei das Verfahren zur Ausbildung eines endlosen Metallverbundes fortlaufend durchgeführt wird.

2. Verfahren nach Anspruch 1, **dadurch gekennzeichnet, dass** der Metallverbund auf seinen beiden Flachseiten mit jeweils einer Decklage zeitgleich mit dem Verschweißen der Metallfasern verschweißt wird.

3. Verfahren nach Anspruch 1 oder 2, **dadurch gekennzeichnet, dass** der Metallverbund auf seinen beiden Flachseiten mit jeweils einem Drahtgewebe verschweißt wird.

4. Verfahren nach Anspruch 1, 2 oder 3, **dadurch gekennzeichnet, dass** die flächenhaft ausgebildeten Elektroden zum Aufbringen einer für den Schweißvorgang hinreichenden Presskraft dienen.

5. Verfahren nach einem der Ansprüche 1 bis 4, **dadurch gekennzeichnet, dass** dieses unter Schutzgas ausgeführt wird.

6. Verfahren nach einem der vorhergehenden Ansprüche, **dadurch gekennzeichnet, dass** der Schweißvorgang in weniger als 1 s, vorzugsweise in weniger als 10 ms durchgeführt wird.

7. Verfahren nach einem der vorhergehenden Ansprüche, **dadurch gekennzeichnet, dass** die Metallfasern vor und während des Schweißvorganges mit einem Druck beaufschlagt werden.

8. Verfahren nach Anspruch 7, **dadurch gekennzeichnet, dass** der Druck mit einer Druckkraft von 0,1 N/mm² bis 10 N/mm², vorzugsweise von 1,5 N/mm² bis 6,0 N/mm² erzeugt wird.

## Claims

1. A method for the manufacturing of a porous, plate-shaped metal compound, in which metal fibers in the form of prefabricated metal fiber mats are pressed and welded to each other in one working step, wherein the welding of the metal fibers is carried out by impulse welding using flat electrodes, wherein the method is continuously carried out for forming an endless metal compound.

2. A method according to claim 1, **characterized in that** the two flat sides of the metal compound are respectively welded to a cover layer, simultaneously with the welding of the metal fibers.

3. A method according to claim 1 or 2, **characterized in that** the two flat sides of the metal compound are respectively welded to a woven wire-cloth.

4. A method according to claim 1, 2 or 3, **characterized in that** the flat designed electrodes serve to apply a pressing force which is sufficient for the welding operation.

5. A method according to one of the claims 1 through 4, **characterized in that** this one is carried out under protective gas.

6. A method according to one of the preceding claims, **characterized in that** the welding operation is carried out in less than 1 s, preferably in less than 10 ms.

7. A method according to one of the preceding claims, **characterized in that** a pressure is applied to the metal fibers before or during the welding operation.

8. A method according to claim 7, **characterized in that** the pressure is generated with a pressure force comprised between 0.1 N/mm² and 10 N/mm², preferably comprised between 1.5 N/mm² and 6.0 N/mm².

## Revendications

1. Procédé de fabrication d'un composite métallique poreux et en forme de plaque, dans lequel des fibres métalliques sous forme de mats en fibres métalliques préfabriqués sont pressées et soudées les unes aux autres en une seule phase de travail, le soudage des fibres métalliques étant réalisé par soudage par impulsion en utilisant des électrodes planes, le procédé étant exécuté en continu pour former un composite métallique infini.

2. Procédé selon la revendication 1, **caractérisé en ce que** les deux côtés plats du composite métallique sont chacun soudés avec une couche de couverture simultanément avec le soudage des fibres métalliques.

3. Procédé selon la revendication 1 ou la revendication 2, **caractérisé en ce que** les deux côtés plats du composite métallique sont chacun soudés avec une toile métallique tissée.

4. Procédé selon la revendication 1, la revendication 2 ou la revendication 3, **caractérisé en ce que** les électrodes planes servent à appliquer une force de pressage suffisante pour la procédure de soudage.

5. Procédé selon l'une des revendications 1 à 4, **caractérisé en ce que** celui-ci est réalisé sous gaz protecteur.

6. Procédé selon l'une des revendications précédentes, **caractérisé en ce que** la procédure de soudage est réalisée en moins de 1 s, de préférence en moins de 10 ms.

7. Procédé selon l'une des revendications précédentes, **caractérisé en ce qu'**une pression est appliquée aux fibres métalliques avant et pendant la procédure de soudage.

8. Procédé selon la revendication 7, **caractérisé en ce que** la pression est générée avec une force de pression comprise entre 0,1 N/mm² et 10 N/mm², de préférence comprise entre 1,5 N/mm² et 6,0 N/mm².
